# EUROPÄISCHE PATENTANMELDUNG

(11) **EP 4 534 843 A1**
(43) Veröffentlichungstag der Anmeldung: **09.04.2025**
(21) Anmeldenummer: 24200491.9
(22) Anmeldetag: 16.09.2024
(51) Int. Cl.: F04B 43/12, F04B 53/10, F04B 53/22, D06F 39/08, F16K 31/04

(54) **HYDRAULIKEINRICHTUNG**

(30) Priorität: 06.10.2023 DE 102023127244
(71) Anmelder: E.G.O. Elektro-Gerätebau GmbH, 75038 Oberderdingen (DE)
(72) Erfinder: Di Maggio, Antonio, 74193 Schwaigern (DE); Schaumann, Uwe, 75038 Oberderdingen (DE)
(74) Vertreter: Patentanwälte Ruff, Wilhelm, Beier, Dauster & Partner mbB

(57) **Zusammenfassung**

Eine Hydraulikeinrichtung weist drehbare Hydraulikmittel wie ein Ventilstellglied oder eine Peristaltikpumpe, einen Elektromotor als Antrieb und ein Getriebe zwischen dem Antrieb und den Hydraulikmitteln auf, wobei die Hydraulikmittel mindestens zwei wasserführende Anschlüsse aufweisen. Erfindungsgemäß sind Antrieb, Hydraulikmittel und Getriebe als einzelne Funktionseinheiten ausgebildet sind und lösbar miteinander verbunden als gesamte Funktionseinheit in Form der Hydraulikeinrichtung. Die lösbare Verbindung ist vorteilhaft mittels Schrauben.

## Beschreibung

### Anwendungsgebiet und Stand der Technik

Die Erfindung betrifft eine Hydraulikeinrichtung mit drehbaren Hydraulikmitteln, welche ein Ventilstellglied oder eine Peristaltikpumpe bzw. Zahnradpumpe sind, sowie mit einem Antrieb und einem Getriebe dazwischen. Die Hydraulikmittel weisen mindestens zwei Anschlüsse auf.

### Aufgabe und Lösung

Der Erfindung liegt die Aufgabe zugrunde, eine eingangs genannte Hydraulikeinrichtung zu schaffen, mit der Probleme des Standes der Technik gelöst werden können und es insbesondere möglich ist, den Aufbau und den Betrieb einer solchen Hydraulikeinrichtung zu verbessern, insbesondere damit die Hydraulikeinrichtung gut repariert werden kann.

Gelöst wird diese Aufgabe durch eine Hydraulikeinrichtung mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Die Hydraulikeinrichtung weist drehbare Hydraulikmittel wie ein Ventilstellglied oder eine Peristaltikpumpe bzw. eine Zahnradpumpe auf. Als Antrieb ist ein Elektromotor vorgesehen, und zwischen dem Antrieb und den Hydraulikmitteln ist ein Getriebe angeordnet. Das Getriebe leitet die Antriebskraft vom Antrieb an die Hydraulikmittel weiter. Das Getriebe kann Zahnräder oder sonstige ähnliche Transmissionsmittel wie Riemen odgl. aufweisen.

Erfindungsgemäß sind Antrieb, Hydraulikmittel und Getriebe als einzelne Funktionseinheiten ausgebildet und lösbar miteinander verbunden als gesamte Hydraulikeinrichtung. So können die Funktionseinheiten einzeln ausgebildet sein und dann miteinander verbunden werden sowie vor allem einzeln ausgetauscht werden im Fall einer notwendigen Reparatur. Dann muss nicht die gesamte Hydraulikeinrichtung ausgetauscht werden, was kostengünstiger und ressourcenschonend ist. Eine Reparatur kann auch schneller sein, wenn nicht alle wasserführenden oder elektrischen Anschlüsse aller Funktionseinheiten getrennt werden müssen.

In Weiterbildung der Erfindung kann das Getriebe ein Getriebegehäuse aufweisen, wobei an dem Getriebe bzw. dem Getriebegehäuse einerseits der Antrieb lösbar befestigt ist und andererseits die Hydraulikmittel lösbar befestigt sind. Vorteilhaft kann eine Befestigung mittels Schrauben erfolgen, alternativ mittels anderer Befestigungsmittel, die einfach und schnell hergestellt und gelöst werden können, insbesondere auch ohne kompliziertes Werkzeug. Das Getriebegehäuse kann stabil genug ausgebildet sein, um Stabilität für die gesamte Hydraulikeinrichtung zu bilden.

In nochmaliger Weiterbildung der Erfindung kann das Getriebe mindestens zwei Zahnräder aufweisen, die ineinandergreifen, wobei ein Zahnrad auf einer Antriebswelle des Antriebs angeordnet ist. Ein anderes Zahnrad ist auf einer Antriebswelle der Hydraulikmittel angeordnet. Es können aber auch noch mehr als die beiden Zahnräder vorgesehen sein, beispielsweise insgesamt drei oder vier Zahnräder. So können Drehmoment und Drehzahl eingestellt werden, ebenso ein Abstand zwischen Antrieb und Hydraulikmittel bzw. zwischen deren jeweiliger Antriebswelle.

In Ausbildung der Erfindung können eine Drehachse des Antriebs und eine Drehachse der Hydraulikmittel parallel zueinander verlaufen. Dann ist eine Kraftübertragung mittels des Getriebes, insbesondere wenn es Zahnräder aufweist, leichter. Vorteilhaft können der Antrieb und die Hydraulikmittel an derselben Seite des Getriebegehäuses angeordnet sein und zueinander benachbart sein. Ein Abstand zwischen ihnen kann weniger als 5 cm bzw. weniger als 3 cm betragen. So kann die Baugröße der Hydraulikeinrichtung gering gehalten werden, um platzsparend eingebaut zu werden.

Die Hydraulikmittel können in einer Ausgestaltung ein Ventilstellglied mit mindestens zwei Anschlüssen sein, wobei es vorzugsweise auch drei oder maximal vier Anschlüsse sein können. Dabei können die Anschlüsse unterschiedlich miteinander verbunden oder verbindbar sein. Vorteilhaft können genau zwei Anschlüsse fluidleitend miteinander verbunden werden oder verbunden sein. Dann ist das Ventilstellglied eine Wasserweiche, es leitet also Flüssigkeit in verschiedene Richtungen oder sperrt den Durchfluss. Alternativ kann das Ventilstellglied ein Dosierventil verschiedener Bauart sein und die Durchflussmenge zwischen zwei Anschlüssen einstellen, insbesondere zwischen keinem Durchfluss und maximalem Durchfluss. Allgemein kann das Ventilstellglied aus der folgenden Gruppe ausgewählt sein: Dosierventil, Kugelventil, Kegelventil, Proportionalventil, Wasserweiche.

Die Hydraulikmittel können in einer anderen Ausgestaltung eine Peristaltikpumpe oder eine Zahnradpumpe sein, vorzugsweise mit zwei Anschlüssen. Insbesondere kann eine Flüssigkeit von immer demselben ersten Anschluss zu immer demselben zweiten Anschluss gepumpt werden. Eine derartige Peristaltikpumpe, die auch als Schlauchpumpe bezeichnet wird, oder eine Zahnradpumpe können als Dosierpumpe eingesetzt werden, insbesondere in einem wasserführenden Haushaltsgerät wie einer Geschirrspülmaschine oder Waschmaschine. Damit können Zusatzstoffe oder Waschmittel für einen Reinigungsvorgang sehr genau und einfach dosiert werden. Dazu kann ein Anschluss einer solchen Pumpe mit einem Behälter für Waschmittel oder Zusatzstoffe verbunden sein und diese aus dem Behälter ansaugen und an dem anderen Anschluss herauspumpen. So können sie in einen Wasserkreislauf, beispielsweise einer Dosiereinrichtung, eingebracht werden. Diese Art von Pumpen weist den großen Vorteil auf, dass sie zwar keine größeren Mengen pumpen können. Dafür können sie aber sehr einfach und robust ausgebildet sein sowie sehr genau dosieren bzw. pumpen.

In weiterer Ausbildung der Erfindung kann eine Montagerichtung sowohl der Hydraulikmittel als auch des Antriebs an das Getriebe eine einzige Richtung aufweisen bzw. einheitlich sein. Vorteilhaft ist diese Richtung senkrecht zur Nachbarrichtung von den Hydraulikmitteln zu dem Antrieb bzw. parallel zu den Drehachsen von Hydraulikmitteln und Antrieb. Eine einheitliche Montagerichtung vereinfacht die erste Montage sowie eine Reparatur der Hydraulikeinrichtung.

In nochmals weiterer Ausbildung der Erfindung kann eine Montagerichtung innerhalb der Hydraulikmittel bzw. zur Montage der Hydraulikmittel der Montagerichtung der Hydraulikmittel und des Antriebs an das Getriebe entsprechen. Insbesondere kann dies von Vorteil sein, wenn die Hydraulikmittel ein Ventil bzw. ein Kegel-Ventil sind, aber auch bei anderen Ausgestaltungen der Hydraulikmittel.

Vorteilhaft kann an der Hydraulikeinrichtung ein Sensor angeordnet sein, insbesondere kann dies ein Sensor zur Positionserkennung bzw. Drehstellungserkennung eines Ventilkörpers bzw. Kegel-Ventilkörpers eines Ventils als Hydraulikmittel sein. Ein solcher Sensor kann wie ein üblicher Sensor für diese Erkennungen ausgebildet sein. Er kann sowohl an dem Antrieb als auch an dem Hydraulikmitteln angeordnet sein, wegen der höheren Drehzahl des Antriebs und weil es hauptsächlich um die Positionserkennung bzw. Drehstellungserkennung der Hydraulikmittel geht, sollte er an diesen Hydraulikmitteln angeordnet sein.

In Weiterbildung der Erfindung kann eine Antriebswelle der Hydraulikmittel derart ausgebildet und angeordnet sein, dass sie frei zugänglich ist. Diese Antriebswelle bewegt bzw. trägt das Ventilstellglied, und an ihr greift das Getriebe an bzw. sie ist mit dem Getriebe verbunden, insbesondere mit Zahnrädern odgl. in dem Getriebe. Die Antriebswelle kann durch das Getriebe verlaufen, vorteilhaft mindestens ein Zahnrad tragen, und aus diesem heraus bzw. über dieses hinaus auf der anderen Seite frei hinausragen und abstehen. Dieser freie Bereich bzw. diese freie Antriebswelle ist zugänglich und kann genutzt werden, beispielsweise kann ein vorgenannter Sensor daran angeordnet sein bzw. an ihr und an dem Getriebegehäuse.

In nochmaliger Weiterbildung der Erfindung kann allgemein an dem Ventilstellglied als Hydraulikmittel bzw. konkret an einer Antriebswelle oder einem Zahnrad dafür ein Aktor angeordnet sein, der vorzugsweise dazu ausgebildet ist, das Ventilstellglied zu verstellen oder einzustellen. Beispielsweise ist das Ventilstellglied ein Kegel-Ventil, das so verstellt werden kann. So kann das Ventilstellglied in vertikaler Richtung bzw. in Richtung entlang der Antriebswelle verstellt werden. Beispielsweise kann ein Kegel-Ventil zur Reinigung sozusagen gelöst oder gelockert werden, dann wird es gespült zur Reinigung, und dann wieder eingestellt wie zuvor. Ein solcher Aktor kann einen eigenen Antrieb aufweisen, beispielsweise elektromagnetisch oder als Motor. Alternativ kann er in einer einfachen Ausgestaltung auch eine manuell oder mit Werkzeug verstellbare Schraube sein. Zusätzlich kann der Aktor eine Drehpositionserkennung aufweisen, die rein mechanisch einfach eine Anzeige ist, alternativ kann es eine elektronische Anzeige sein.

In weiterer Ausgestaltung der Erfindung kann zwischen den Hydraulikmitteln und dem Getriebe bzw. Getriebegehäuse eine Abdeckung angeordnet sein, die die Hydraulikmittel abdeckt bzw. überdeckt. Diese Abdeckung kann beispielsweise ein Deckel für das Getriebe bzw. Getriebegehäuse sein, vorteilhaft eine ganze Seite des Getriebes abdecken. Die Abdeckung kann derart ausgebildet sein, dass sie bei bzw. nach Trennen der Hydraulikmittel von dem Getriebe bzw. von dem Getriebegehäuse an den Hydraulikmitteln verbleiben können. So können die Hydraulikmittel unverstellt bleiben, müssen also nicht wieder eingestellt werden, wenn sie wieder zusammengebaut sind. Das gilt für ein Ventilstellglied wie auch für die genannten Pumpen. Vorteilhaft kann die Abdeckung auch an dem Getriebe bzw. an dem Getriebegehäuse befestigt sein, wodurch auch gleichzeitig die Hydraulikmittel daran befestigt werden können.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in Zwischen-Überschriften und einzelne Abschnitte beschränkt die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: ein erfindungsgemäßes Motorventil als Hydraulikeinrichtung in der Seitenansicht mit geschnittenem Getriebe,
- Fig. 2: eine Draufsicht auf das Motorventil aus Fig. 2 mit Ventilstellglied und Antrieb auf derselben Seite des Getriebegehäuses,
- Fig. 3: eine alternative Ausgestaltung eines Motorventils als Erstausstattung mit langem Getriebegehäuse, wobei Ventilstellglied und Antrieb auf unterschiedlichen Seiten angeordnet sind, sowie eine Darstellung mit Ersatz von Antrieb und Getriebe,
- Fig. 4: eine vergrößerte Ansicht ähnlich Fig. 1 von Hydraulikmitteln in Form eines Ventilstellglieds mit Ventilwelle durch das Getriebe und einem Drehsensor am überstehenden Ende, und
- Fig. 5: eine Explosionsdarstellung einer weiteren Ausgestaltung eines Motorventils mit einem Getriebegehäuse, das zu Ventilstellglied und Antrieb hin einen abnehmbaren Gehäusedeckel aufweist.

### Detaillierte Beschreibung der Ausführungsbeispiele

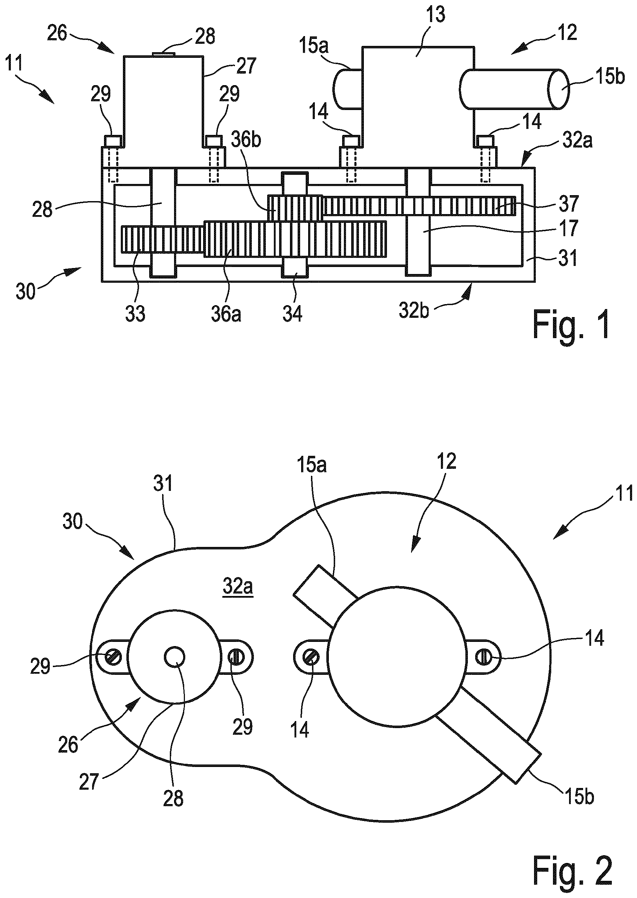

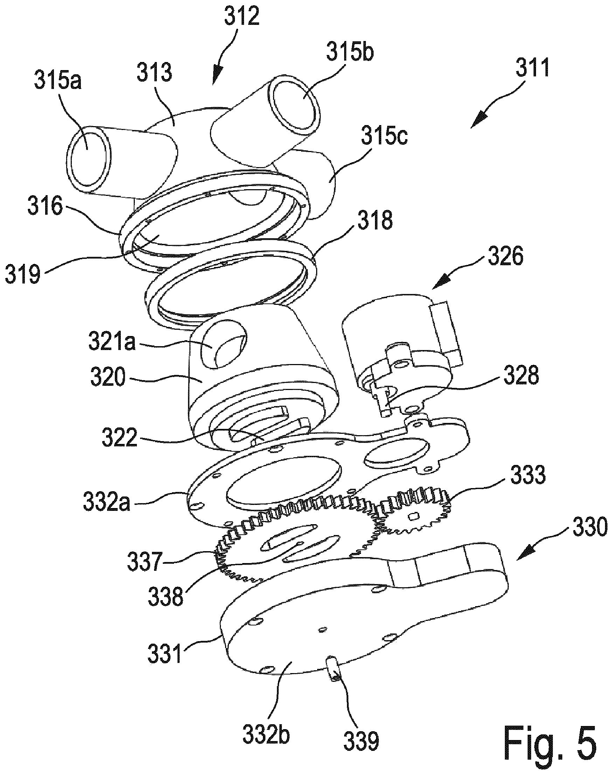

In der Fig. 1 ist ein erfindungsgemäßes Motorventil 11 als eingangs genannte Hydraulikeinrichtung dargestellt. Dieses Motorventil 11 kann beispielsweise in einem wasserführenden Haushaltsgerät wie einer Waschmaschine oder einer Spülmaschine eingesetzt werden, aber auch in vielen anderen Anwendungen. Das Motorventil 11 weist ein Ventilstellglied 12 auf, welches hier als Durchlassventil und als Proportionalventil mit zwei Anschlüssen 15a und 15b dargestellt ist. Das Ventilstellglied 12 weist ein Ventilgehäuse 13 auf, welches mittels zweier Schrauben 14 an ein Getriebe 30 bzw. an dessen Oberseite 32a angeschraubt ist. Der innere Aufbau des Ventilstellglieds 12 ist hier nicht von Bedeutung, das Ventilstellglied 12 kann innen per se aufbaut sein wie aus dem Stand der Technik bekannt. Es wird auch verwiesen auf die Fig. 5, in der ein spezielles Kegelventil im Detail dargestellt ist und beschrieben wird.

Die beiden Anschlüsse 15a und 15b sind einander gegenüberliegend, was aber nicht zwingend so sein muss. Des Weiteren könnten auch weitere Anschlüsse vorgesehen sein. So kann das Ventilstellglied 12 bis zu vier Anschlüsse aufweisen, dann ist weniger eine Regelung eines Durchflusses von Flüssigkeit bzw. Wasser beabsichtigt, sondern als vorgenannte Wasserweiche ein Umstellen bei jeweils im Wesentlichen vollem Durchlassquerschnitt.

Für das Ventilstellglied 12 ist ein Antrieb 26 vorgesehen, der einen Elektromotor 27 aufweist. Der Elektromotor 27 weist eine durchgehende Antriebswelle 28 auf, die auch weit in das Getriebe 30 hineinreicht bzw. an einer Unterseite 32b eines Getriebegehäuses 31 in einem Sackloch gelagert ist. Der Elektromotor 27 kann auf beliebige Art und Weise ausgebildet sein. Durch das Getriebe 30 kann er auch genügend Drehmoment bewirken zur Betätigung des Ventilstellglieds 12. Der Elektromotor 27 kann ein Schrittmotor und/oder ein Motor mit integriertem Getriebe sein.

In dem Getriebegehäuse 31 ist ganz links die Antriebswelle 28 des Elektromotors 27 bzw. des Antriebs 26 gelagert. Auf ihr ist ein Antriebsritzel 33 befestigt, welches relativ klein ist. Es greift in ein unteres großes Zahnrad 36a, das auf einer Zahnradwelle 34 sitzt. Die Zahnradwelle 34 wiederum ist an der Oberseite 32a und an der Unterseite 32b in entsprechenden Sacklöchern gelagert. Ein oberes kleines Zahnrad 36b ist ebenfalls auf der Zahnradwelle 34 angeordnet, wobei es ein separates Teil und darauf befestigt sein kann. Alternativ kann es einteilig mit dem unteren Zahnrad 36a verbunden sein.

Das obere Zahnrad 36b treibt wiederum ein Ventilzahnrad 27 an, das erheblich größer ist. Das Ventilzahnrad 37 ist auf der zuvor genannten Ventilwelle 17 befestigt. Die Ventilwelle 17 ist unten in einem Sackloch in der Unterseite 32b gelagert und verläuft oben in das Ventilstellglied 12 hinein, beispielsweise um dort Ventilkörper, Ventilkugeln, Schieber odgl. zu betätigen.

Durch Lösen der Schrauben 14 am Ventilstellglied 12 einerseits oder der Schrauben 29 am Antrieb 26 andererseits kann jede dieser beiden Komponenten vom Motorventil 11 bzw. von der Baueinheit gelöst werden und somit ausgetauscht werden. Dies kann gemacht werden, wenn eines der Teile fehlerhaft ist oder sich Anforderungen oder Leistungswünsche ändern. Entsprechend kann auch das Getriebe 30 allein ausgetauscht werden, insbesondere wenn es fehlerhaft ist.

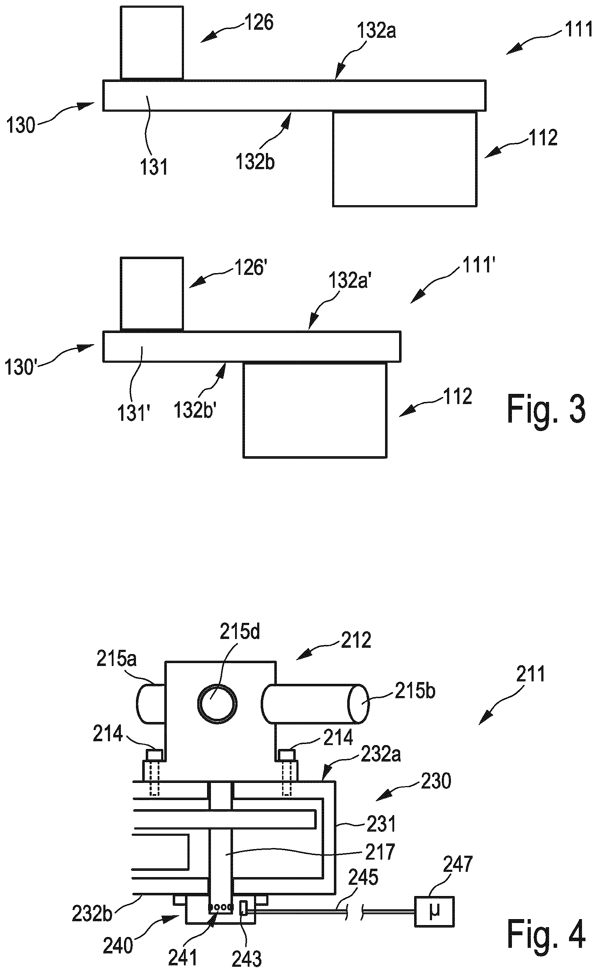

In der Fig. 3 ist oben ein Motorventil 111 dargestellt, wie es zuerst hergestellt und beispielsweise in eine Waschmaschine eingebaut worden ist. Das Motorventil 111 weist ein Getriebe 130 mit einem Getriebegehäuse 131 auf, das eine Oberseite 132a und eine Unterseite 132b aufweist. Im rechten Bereich ist an der Unterseite 132b ein Ventilstellglied 112 befestigt, vorteilhaft wiederum mittels Schrauben. Im linken Bereich ist ein Antrieb 126 auf der anderen Seite des Getriebegehäuses 131, nämlich auf der Oberseite 132a, angeordnet. Dies ist im Rahmen der Erfindung selbstverständlich möglich und leicht zu realisieren.

Unten in der Fig. 3 ist ein repariertes Motorstellventil 111' dargestellt, welches insgesamt bezüglich der Ventilfunktionen ähnlich sein kann aber nicht muss. Es soll aber weiterhin im selben Gerät verbaut sein. Das Ventilstellglied 112 ist bei dem veränderten Motorventil 111' unverändert, also dasselbe. Ausgetauscht wurde zum einen der Antrieb, der jetzige Antrieb 126' ist etwas länger und weist dafür geringeren Durchmesser auf. Er ist auch ein Serienbauteil, aber eben aus einer anderen Serie als der alte Antrieb 126. Er kann beispielsweise im Zuge einer Reparatur den alten Antrieb 126 ersetzt haben. Dies kann sein, weil der neue Antrieb 126` leistungsfähiger ist, alternativ weil der alte Antrieb 126 nicht mehr funktionsfähig war und ein baugleicher Antrieb nicht mehr zur Verfügung stand bzw. steht.

Zum anderen ist auch das Getriebe 130' verändert, das Getriebegehäuse 131' ist nämlich erheblich kürzer, und zwar etwa 12% bis 15% kürzer. Auch dies kann daran liegen, dass das alte Getriebe 130 nicht mehr verfügbar war. Somit ist es möglich, das Ventilstellglied 112 weiterhin zu verwenden und die anderen beiden hauptsächlichen Komponenten zu ersetzen. In der Regel wird wohl nur eine einzige Komponente ersetzt werden. Dabei ist es für die Ausgestaltung von Getriebegehäuse, Ventilstellglied bzw. Hydraulikmittel allgemein und Antrieb nur wichtig, dass sie anschlussmäßig zusammenpassen, insbesondere das Getriebe individuell an jeweils das Ventilstellglied oder allgemein an Hydraulikmittel und an einen Antrieb passt.

In der Fig. 4 ist in Vergrößerung dargestellt, dass von einem Ventilstellglied 212 mit vier Auslässen 215a, 215b und 215d, wobei der vierte Auslass nicht erkennbar ist, eine Ventilwelle 217 in ein Getriebe 230 bzw. dessen Getriebegehäuse 231 hineinragt. Vor allem aber ragt die Ventilwelle 217 durch das Getriebegehäuse 231 hindurch und reicht somit von dem Ventilstellglied 212 an der Oberseite 232a bis über die Unterseite 232b hinaus. Hier ist ein Drehsensor 240 an der Unterseite 232b vorgesehen. Der Drehsensor 240 soll allgemein eine Drehstellung der Ventilwelle 217 und somit des Ventilstellglieds 212 genau ermitteln und als Signal verwertbar machen. Eine hier beispielhaft dargestellte Möglichkeit weist einen Ring von optischen Markierungen 241 am unteren freien Ende der Ventilwelle 217 auf bzw. dieser ist hier vorgesehen. Die optischen Markierungen 241 können beispielsweise abwechselnd als schwarz-weiße Striche ausgebildet sein oder als reflektierende und nicht-reflektierende Flächen im Wechsel. Rechts daneben ist ein Lichtsensor 243 vorgesehen, der diese optischen Markierungen 241 abtastet, vorteilhaft mittels ausgesandtem und ggf. reflektiertem Licht, und daraus die Drehstellung erkennt bzw. aus der Veränderung der Drehstellung erkennen kann. Derartige Drehsensoren sind in vielfältiger Form dem Fachmann bekannt.

Der Drehsensor 240 bzw. der Lichtsender 243 ist mittels einer Anschlussleitung 245 mit einer Steuerung 247 verbunden. Diese Steuerung kann auch weitere Funktionen steuern, insbesondere den Antrieb für das Ventilstellglied 212. Eine mögliche Verbesserung der Genauigkeit der Erfassung der Drehstellung kann dadurch erreicht werden, dass die Steuerung 247 auch mit dem Antrieb bzw. einer Leistungsversorgung oder Leistungsregelung dafür verbunden ist. Wenn in dem Antrieb selbst auch ein Drehsensor enthalten ist, beispielsweise als Inkrementalgeber, so ist die Steuerung 247 vorteilhaft auch damit verbunden.

In der Fig. 5 ist ein weiteres Motorventil 311 dargestellt, wobei hier das Ventilstellglied 312 als sogenannte Wasserweiche ausgebildet ist, außerdem als sogenanntes Kegelventil. Das Ventilstellglied 312 weist ein Ventilgehäuse 313 auf mit drei Anschlüssen 315a, 315b und 315c. Unten am Ventilgehäuse 313 ist ein Flanschring 316 vorgesehen, der zum Aufschrauben auf ein Getriebe 330 dient. Dies wird nachfolgend noch erläutert. Hier ist auch ein Dichtring 318 vorgesehen, der das Ventilgehäuse 313 gegen das Getriebe 330 abdichtet.

Als Ventilkörper ist ein Kegelventilkörper 320 vorgesehen, der passend zu einem innen im Ventilgehäuse 313 ausgebildeten Kegelventilsitz 319 ausgebildet ist. Der Kegelventilkörper 320 weist drei Bohrungen 321 auf, von denen hier nur eine Bohrung 321a dargestellt ist. Die Bohrungen 321 im Kegelventilkörper 320 sind so ausgebildet, dass an den Anschlüssen 315a bis 315c jeweils beliebig zwei flüssigkeitsleitend miteinander verbunden sind und einer gesperrt ist. Das Ventilstellglied 312 dient hier also weniger zur Regelung eines Volumenstroms bezüglich seiner Stärke oder Durchströmung, sondern vielmehr dazu, als Wasserweiche einen Flüssigkeitsstrom zu leiten bzw. zu lenken.

An der Unterseite des Kegelventilkörpers 320 sind zwei Vorsprünge 322 ausgebildet, die anstelle der zuvor erläuterten Ventilwelle in entsprechende Ausnehmungen im Ventilzahnrad 337 eingreifen und so für eine drehmomentübertragende Verbindung sorgen. Zusätzlich ist eine Madenschraube 339 in eine Unterseite 332b eines Getriebegehäuses 331 in Verlängerung der Drehachse des Kegelventilkörpers 320 eingeschraubt, die an ihrem oberen Ende spitz ausgebildet ist. Sie greift in eine Vertiefung 338 im Ventilzahnrad ein und dient einerseits zur Zentrierung. Des Weiteren kann andererseits durch Einschrauben oder Ausschrauben der Madenschraube 339 eingestellt werden, mit welchem Druck das Ventilzahnrad 337 gegen den Kegelventilkörper 320 drückt und diesen weiter in das Ventilgehäuse 313 bzw. gegen den Kegelventilsitz 319 drückt. Somit kann der Drehwiderstand eingestellt werden, gleichzeitig aber auch eine Dichtheit des Ventilstellglieds 312 bzw. der Wasserweiche in Verbindung mit der Ausführung der Dichtung 318 und dem anliegenden Druck in den Anschlüssen 315a bis 315c. Anstelle einer solchen Madenschraube, die mit ihrer Spitze in die Vertiefung 338 eingreift, kann auch ein sonstiges Druckelement mit einer Kugel anstelle der Spitze verwendet werden, insbesondere ein federndes oder federnd ausgebildetes Druckstück. So kann der Kegelventilkörper 320 federnd gegen den Kegelventilsitz 319 gedrückt werden.

Als weitere Besonderheit ist hier das Getriebegehäuse 331 mit einer separaten, als Deckel abnehmbaren Oberseite 332a versehen. Diese Oberseite 332a kann mittels vier um das Ventilgehäuse 313 herum verteilte Schrauben am restlichen Getriebegehäuse 331 festgeschraubt werden. Das Ventilstellglied 312 wird dann mit vier jeweils um 45° dazu verdrehten Schrauben an der Oberseite 332a festgeschraubt, und zwar mit dem vorgenannten Flanschring 316. Somit kann das Ventilstellglied 312 abgenommen werden, beispielsweise zum Austauschen, während das Getriebe 330 noch geschlossen bleibt und somit auch das Ventilzahnrad 337 und ein Antriebsritzel 333 unverändert in Position bleiben. Damit kann auch die Position des Getriebegehäuses 331 gegenüber den Anschlüssen 315a bis 315c verändert werden, was auch die Position des Antriebs 326 betrifft.

Dieses Antriebsritzel 333 sitzt auf einer Antriebswelle 328 des Antriebs 326, der hier schon mit einem kleinen integrierten Getriebe versehen ist, was aber keine Rolle spielt. Der Antrieb 326 kann mittels zweier Schrauben an der Oberseite 332a festgeschraubt werden.

Wie zuvor erläutert worden ist, kann auch bei dem Motorventil 311 der Fig. 5 jeder der drei Hauptbestandteile ausgewechselt werden. Ein Wechsel von Ventilstellglied 312 und Antrieb 326 ist besonders einfach, da sie nur für sich gesehen von dem Getriebe 330 gelöst werden müssen bzw. abgeschraubt werden müssen. So können sie im Fall eines Austauschs sehr leicht gehandhabt werden. Soll das Getriebe 330 ausgetauscht werden, so ist dies etwas aufwändiger, aber immer noch machbar. Wichtig ist eben nur, dass die Schnittstellen zwischen Getriebe 330 und Antrieb 326 einerseits und Getriebe 330 und Ventilstellglied 312 andererseits jeweils gleich sind und passen. Des Weiteren sollte die gesamte Baugröße nicht zu stark unterschiedlich sein, um in die vorgegebene Einbausituation noch eingepasst werden können.

## Patentansprüche

1. Hydraulikeinrichtung mit drehbaren Hydraulikmitteln wie einem Ventilstellglied oder einer Peristaltikpumpe bzw. Zahnradpumpe, mit einem Elektromotor als Antrieb und mit einem Getriebe zwischen dem Antrieb und den Hydraulikmitteln,
wobei die Hydraulikmittel mindestens zwei Anschlüsse aufweisen,
**dadurch gekennzeichnet, dass** Antrieb, Hydraulikmittel und Getriebe als einzelne Funktionseinheiten ausgebildet sind und lösbar miteinander verbunden sind als gesamte Hydraulikeinrichtung.

2. Hydraulikeinrichtung nach Anspruch 1, **dadurch gekennzeichnet, dass** das Getriebe ein Getriebegehäuse aufweist, wobei an dem Getriebegehäuse einerseits der Antrieb lösbar befestigt ist und andererseits die Hydraulikmittel lösbar befestigt sind, wobei vorzugsweise eine Befestigung mittels Schrauben erfolgt.

3. Hydraulikeinrichtung nach Anspruch 1 oder 2, **dadurch gekennzeichnet, dass** das Getriebe mindestens zwei Zahnräder aufweist, die ineinandergreifen, wobei ein Zahnrad auf einer Antriebswelle des Antriebs angeordnet ist und ein anderes Zahnrad auf einer Antriebswelle der Hydraulikmittel angeordnet ist.

4. Hydraulikeinrichtung nach einem der vorhergehenden Ansprüche, **dadurch gekennzeichnet, dass** eine Drehachse des Antriebs und eine Drehachse der Hydraulikmittel parallel zueinander verlaufen.

5. Hydraulikeinrichtung nach Anspruch 4, **dadurch gekennzeichnet, dass** der Antrieb und die Hydraulikmittel an derselben Seite des Getriebegehäuses angeordnet sind und benachbart sind, insbesondere mit einem Abstand dazwischen von weniger als 5 cm bzw. weniger als 3 cm.

6. Hydraulikeinrichtung nach einem der vorhergehenden Ansprüche, **dadurch gekennzeichnet, dass** die Hydraulikmittel ein Ventilstellglied sind mit mindestens zwei Anschlüssen, vorzugsweise mit maximal vier Anschlüssen, wobei insbesondere maximal zwei Anschlüsse fluidleitend miteinander verbunden sind.

7. Hydraulikeinrichtung nach Anspruch 6, **dadurch gekennzeichnet, dass** das Ventilstellglied ausgewählt ist aus der Gruppe: Kugelventil, Kegelventil, Proportionalventil, Dosierventil, Wasserweiche.

8. Hydraulikeinrichtung nach einem der vorhergehenden Ansprüche 1 bis 5, **dadurch gekennzeichnet, dass** die Hydraulikmittel eine Peristaltikpumpe sind, vorzugsweise mit zwei Anschlüssen, wobei insbesondere eine Flüssigkeit von immer demselben ersten Anschluss zu immer demselben zweiten Anschluss pumpbar ist.

9. Hydraulikeinrichtung nach einem der vorhergehenden Ansprüche, **dadurch gekennzeichnet, dass** eine Montagerichtung sowohl der Hydraulikmittel als auch des Antriebs an das Getriebe eine einzige Richtung aufweist bzw. einheitlich ist.

10. Hydraulikeinrichtung nach Anspruch 9, **dadurch gekennzeichnet, dass** die Montagerichtung sowohl der Hydraulikmittel als auch des Antriebs an das Getriebe eine Richtung senkrecht zur Nachbarrichtung zwischen Hydraulikmitteln und Antrieb bzw. parallel zu den Drehachsen von Hydraulikmitteln und Antrieb ist.

11. Hydraulikeinrichtung nach einem der vorhergehenden Ansprüche, **dadurch gekennzeichnet, dass** eine Montagerichtung innerhalb der Hydraulikmittel bzw. zur Montage der Hydraulikmittel, insbesondere als Ventil bzw. als Kegel-Ventil, der Montagerichtung der Hydraulikmittel und des Antriebs an das Getriebe entspricht.

12. Hydraulikeinrichtung nach einem der vorhergehenden Ansprüche, **dadurch gekennzeichnet, dass** an der Hydraulikeinrichtung ein Sensor angeordnet ist, insbesondere ein Sensor zur Positionserkennung eines Kegel-Ventilkörpers bzw. Ventilkörpers eines Ventils als Hydraulikmittel.

13. Hydraulikeinrichtung nach einem der vorhergehenden Ansprüche, **dadurch gekennzeichnet, dass** eine Antriebswelle der Hydraulikmittel frei zugänglich ist, insbesondere durch das Getriebe verläuft und über dieses auf der anderen Seite frei hinausragt, wobei vorzugsweise an dieser freien Antriebswelle eine Sensorvorrichtung angeordnet ist.

14. Hydraulikeinrichtung nach einem der vorhergehenden Ansprüche, **dadurch gekennzeichnet, dass** an der Antriebswelle des Ventilstellglieds ein Aktor angeordnet ist, wobei insbesondere der Aktor dazu ausgebildet ist, das Ventilstellglied in vertikaler Richtung bzw. in Richtung entlang der Antriebswelle einzustellen oder zu verstellen, wobei vorzugsweise der Aktor eine Drehpositionserkennung aufweist.

15. Hydraulikeinrichtung nach einem der vorhergehenden Ansprüche, **dadurch gekennzeichnet, dass** zwischen den Hydraulikmitteln und Getriebe bzw. Getriebegehäuse eine Abdeckung angeordnet ist, die die Hydraulikmittel abdeckt bzw. überdeckt, wobei die Abdeckung derart ausgebildet ist, dass die Abdeckung bei bzw. nach Trennen der Hydraulikmittel von dem Getriebe bzw. von dem Getriebegehäuse an den Hydraulikmitteln verbleibt, wobei vorzugsweise die Abdeckung an dem Getriebe bzw. an dem Getriebegehäuse befestigt ist.
